# EUROPEAN PATENT SPECIFICATION

(11) **EP 2 384 089 B1**
(45) Date of publication and mention of the grant of the patent: **19.08.2015**
(21) Application number: 11158504.8
(22) Date of filing: 16.03.2011
(51) Int. Cl.: H05B 33/08

(54) **Device for controlling power supplied towards light sources and related method**
Vorrichtung zur Ansteuerung der Stromversorgung von Lichtquellen und dazugehöriges Verfahren
Appareil de commande de tension d'alimentation des sources de lumière et procédé correspondant

(30) Priority: 21.04.2010 IT TO20100334
(43) Date of publication of application: 02.11.2011
(73) Proprietor: OSRAM GmbH, 80807 München (DE); OSRAM S.P.A. - SOCIETA' RIUNITE OSRAM EDISON CLERICI, 20126 Milano (IT)
(72) Inventor: Carraro, Federico, 31041 Cornuda (Treviso) (IT); De Anna, Paolo, 31039 Vallà di Riese Pio X (Treviso) (IT); Fighera, Diego, 31044 Montebelluna (Treviso) (IT)
(74) Representative: Bosotti, Luciano

(56) References cited:
- EP-A1- 2 164 300
- WO-A2-2009/029553
- DE-A1- 3 832 109
- US-A1- 2009 237 007

## Description

### Field of the invention

This disclosure relates to techniques for controlling power supply towards light sources. This disclosure was devised with specific attention paid to its possible application to the control of power supply towards light sources which are subjected to an output intensity regulating function (so-called "dimming") implemented via Pulse Width Modulation, PWM, by making use of the fact that the output intensity of such a light source is dependent on the (average) intensity of the current flowing through the source itself. LED light sources are an example of sources having such a feature.

### Description of the related art

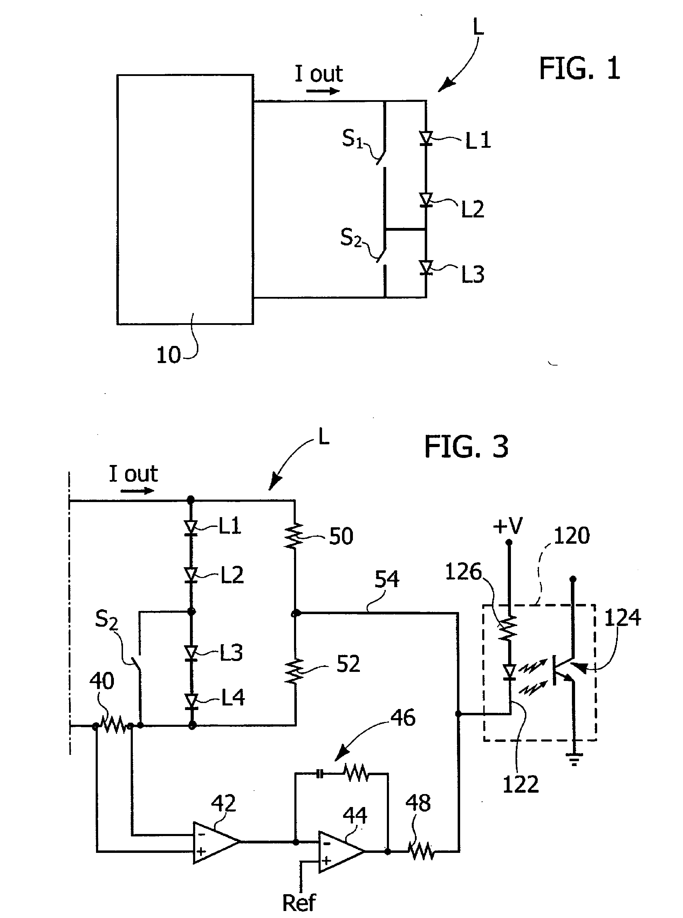

The flow diagram in Figure 1 schematically shows a light source L comprising, for example, one or more LEDs L1, L2, L3, ... (connected in series, in the illustrated example), organized in one or more cells, to which a respective switch can be coupled, for example an electronic switch S1, S2. The switch is connected to the respective LED cell in such a way that, when the switch is open, the current Iout coming from a power supply source 10 flows through the LED or the LEDs of the cell, which are therefore energized, whereas when the switch is closed (i.e. conductive), current flows through the switch itself and not through the LED or the LEDs, which are therefore de-energized.

By controlling the opening and closing of the switch or switches S1, S2, for example by varying the duty cycle of a rectangular waveform driving the opening and closing of the switch or switches, and as a consequence by varying the duration of the time intervals during which the individual LED cells are either energized or short-circuited by the respective switch, and therefore de-energized, it is possible to correspondingly vary the output light intensity. The foregoing takes place according to known criteria, so as not to require a more detailed explanation herein.

In implementing dimming solutions of the kind schematically shown in Figure 1, it is desirable to have a current source 10 with a very rapid dynamic response, so as to be able to maintain the output current Iout flowing on the LEDs as steady as possible. This is true even in the case of a rapid variation in time of the number of LEDs that are energized at every given instant.

In order to meet this requirement, the generator 10 should behave as an ideal current generator, able to maintain the same output current value Iout wholly irrespective of the variations in the load instantly constituted by LEDs L1, L2, L3, ... and by the switches S1, S2, ... coupled thereto.

In the state of the art there are known direct current driving solutions for light sources such as LEDs, wherein the power source is comprised of a Switching Mode Power Supply, SPMS.

Specifically, solutions are known which are based on a feedback mechanism, wherein a signal representative of the current flowing through the load is used as a driving variable of a control loop. The design of the controller used can be for example the one known as PI (proportional/integral control), or else the design known as PID (proportional/integral/derivative).

In various known solutions, the bandwidth of the current feedback loop is maintained definitely below (approx. one tenth or less) the switching frequency of the power supply source 10 (typically in the range of 20 - 200 kHz). The ability to perform the dimming action is attained only through a duty-cycle modulation, used for driving the LEDs. More specifically, the invention relates to a device according to the preamble of claim 1, which is known e.g. from WO 2009/029553 A2, taken as a model for the preamble of claim 1. Also DE 38 32 109 A1 and US 2009/237007 A1 are of interest for the invention.

### Object and summary of the invention

The inventors have observed that such previously known solutions are unable to ensure a satisfactory operation. As a matter of fact, the variation of the current output from the power supply source, used as a feedback variable, tends to follow the voltage variation, caused by the load change due to the opening and closing of the switches in charge of the dimming function, with an intrinsic delay of the feedback loop, due to the circuit features (for example the output inductor in the case of a "buck" type converter). The feedback loop has therefore a tendency to be excessively slow in performing its control function.

The object of the invention is to overcome the previously described drawback.

According to the invention, such an object is achieved through a device having the features specifically set forth in claim 1 that follows. The invention also concerns a related method as called for in claim 7. The claims are an integral part of the technical teaching of the invention provided herein.

In various embodiments, the problem of maintaining a quick and effective regulation of the output current is solved not by following, but in a way by anticipating (or predicting) the possible short-term current variation, on the basis of the voltage variations observed at the output.

### Brief description of the annexed views

The invention will now be described, by way of non-limiting example only, with reference to the enclosed views, wherein:
- Figure 1 has already been described in the foregoing,
- Figure 2 is a functional block diagram of an embodiment, and
- Figure 3 shows a detail of a circuit arrangement of an embodiment.

### Detailed description of embodiments

In the following description, numerous specific details are given to provide a thorough understanding of embodiments. The embodiments can be practiced without one or more of the specific details, or with other methods, components, materials, etc. In other instances, well-known structures, materials, or operations are not shown or described in detail to avoid obscuring aspects of the embodiments.

Reference throughout this specification to "one embodiment" or "an embodiment" means that a particular feature, structure, or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

The headings provided herein are for convenience only and do not interpret the scope or meaning of the embodiments.

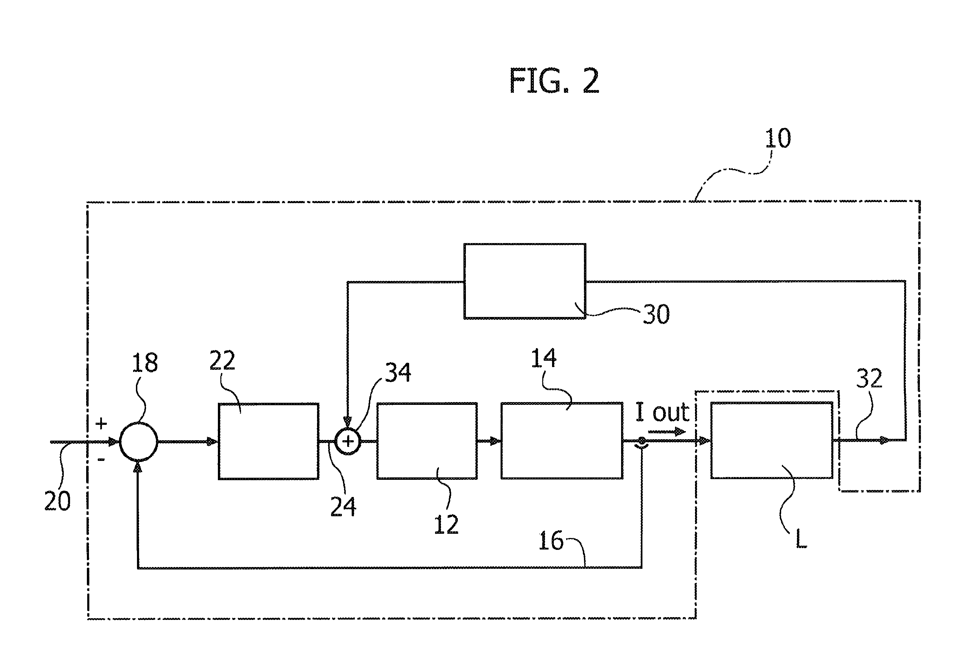

In Figure 2, the modules enclosed by a dot-dash line are the modules adapted to be comprised in various embodiments of a power supply source 10 in a general structure of the kind shown in Figure 1.

According to criteria known in themselves, such modules may comprise a modulator 12 driving (for example in a PWM driving mode) a power stage 14, which is adapted to supply a current Iout towards a load L consisting of one ore more LED cells with respectively associated switches S1, S2, etc., adapted to perform a dimming function according to the implementation previously described with reference to Figure 1.

Reference 16 denotes a feedback line containing a signal indicative of the current intensity Iout. In various embodiments, line 16 converges into a summation node 18, which receives on a line 20 a reference signal representative of the desired value of the current Iout. Node 18 is a summation node with sign, which is adapted to determine the difference between the reference signal on line 20 (desired value of current Iout) and the feedback signal on line 16 (actual value of current Iout).

The signal representative of such difference is fed to the input of a module 22 of a proportional/integral (PI) type (for example k₁ + k₂/s) or of a proportional/integral/derivative type (PID), the output line of which, denoted by 24, is adapted to act on modulator 12 driving the power stage 14 in an effort to cause the actual value of current Iout to have the same value as the desired value, set on line 20.

What has so far been described with reference to Figure 2 substantially corresponds to criteria and operation principles known in themselves, so as not to require a detailed description herein.

Various embodiments involve the addition, to the described general design, of a further module 30, adapted to perform a so to say "predictive" function. As a matter of fact, module 30 performs on a line 32, a detection or "sensing" of the voltage present on load L, and forwards the result of the sensing operation to modulator 12, specifically to a summation node 34 interposed between module 22 and modulator 12; the output signal of module 30 therefore cooperates with the output signal of module 22 in performing the action of controlling current Iout.

As it will be better understood from the following detailed description of the diagram in Figure 3, the illustration in Figure 2 is a "high level" representation, adapted to highlight that, in various embodiments, the "current" feedback consisting in the feedback loop 16, 18, 20, 22 is complemented by an "voltage" predicting action, consisting of elements 30 and 32.

The circuit diagram in Figure 3 shows an example of how the structure in Figure 2 can be implemented in order to minimize the necessary components.

In the diagram of Figure 3, references L1, L2, L3 and L4 show a plurality of LEDs organized in several cells (for example two cells, the first comprising LEDs L1, L2 and the second comprising LEDs L3 and L4) with the presence of a single switch S2 which, when it is brought to its closing position, short-circuits LEDs L3 and L4 to perform the desired dimming function.

Figure 3 highlights (in contrast to the diagram in Figure 1) the fact that not all LED cells making up load L must necessarily have respective dimming switches coupled thereto.

In the case of what depicted in Figure 3, LEDs L1 and L2 have no dimming switch coupled thereto. In contrast, LEDs L3 and L4 have a respective associated switch S2 to perform the dimming action.

It will be understood that a function of the power supply circuit 10, in an arrangement as illustrated in Figure 3, may consist in preventing the dimming action, exerted on the LEDs L3 and L4 through the selective closing/opening of switch S2, from having a negative effect on the intensity of the current flowing through LEDs L1 and L2, and therefore from undesirably varying the brightness thereof.

The diagram in Figure 3 refers to embodiments wherein the feedback action towards modulator 12 is implemented via an optocoupler 120, comprising a LED emitter 122 and a phototransistor 124.

It is to be assumed that the current intensity through diode 122, the anode whereof is connected to a supply voltage +V via a biasing resistor 126, determines the current intensity output from phototransistor 124, and accordingly the voltage generated by the power stage 14 controlled by modulator 12 on load L, consisting of diode cells.

In practice, such elements are adapted to perform, according to criteria which are more clearly explained in the following (and specifically via the resistive adder comprised of the elements 50, 52, 48, 126 shown in Figure 3), the function of driving modulator 12 by the output signal of the summation module 34 in Figure 2.

In the embodiments referred to in Figure 3, a sensing resistor 40 is present which is coupled to load L (for example connected in series thereto) so as to be traversed by a current the intensity whereof is representative of the current intensity Iout.

Across sensing resistor 40 a tension is applied that is likewise indicative of the current intensity Iout. This voltage is applied both to the inverting and to the non-inverting input of a differential amplifier 42. The output of amplifier 42 is in turn applied to the inverting input of an error amplifier 44.

According to the well known criteria on which the implementation of a regulator PI can be based, error amplifier 44 is counter-reacted between its output and the inverting input with an RC circuit 46. The non inverting input of error amplifier 44 is connected to a reference voltage Vref.

The output of PI regulator 44 drives input 122 of optocoupler 120 via resistors 48 (and 126), transforming the voltage output of regulator 44 into current on the LED 122.

The components denoted by 40, 42, 44, 46 and 48 constitute therefore a current feedback loop, which substantially corresponds to the loop comprised of the elements 16, 18, 20 and 22 in Figure 2.

References 50 and 52 indicate two resistors which form a voltage divider, connected across the load L, and to the tapping point whereof a line 54 is connected which leads to the input of optocoupler 120, i.e. to the cathode of LED 122. Divider 50, 52, therefore, likewise drives the input of optocoupler 120 through line 54. Divider 50, 52 and line 54 add therefore the "predictive" action performed by block 30 in Figure 2 to the action of regulator PI performed by block 22 in Figure 2.

In the diagram of Figure 3, the biasing current of optocoupler 120 is therefore made reactive (in direct proportion) to the output voltage detected on load L.

As a result, any quick change of such a load (due to the opening/closing of a switch such as switch S2) can influence without delay the modulation on the primary side of modulator 12, which is enabled to immediately adapt to the new load, without having to wait for the contribution of the current feedback loop comprising elements 40, 42, 44, 48.

The feedback action ("prediction") performed via the voltage divider 50, 52 and line 54 (block 30 in Figure 2) can respond in very short times (within 5-20 microseconds) to any load change. At the same time, the current loop control (components 40, 42, 44, 46 and 48) keeps on performing, more slowly, its action of maintaining the current steady state.

In various embodiments, optocoupler 120 therefore comprises:
- an input electro-optical transducer 122, jointly acted upon by the current feedback loop 40, 42, 44, 46, 48 and the "predictive" control 50, 52, 54, and
- an output opto-electrical transducer 124, which drives the power supply set 12, 14.

The output of optocoupler 120 (as well as the output of the adder block 34 in Figure 2) corresponds therefore to the overlaying of two components. The first component is given by the output of the current controller 40, 42, 44, 46 (of the PI type, in the presently considered example) which operates as a normal closed-loop current regulator. The second component is given by the output of voltage divider 50 and 52, and is therefore adapted to mirror the output voltage directly.

Various embodiments allow therefore to achieve, within a power supply circuit 10 as presently considered, a "quasi-ideal" behaviour of the current generator, with the following advantages:
- a very rapid control of the output current, obtained through a "predictive" behaviour, in comparison with the slower action of closed-loop current control,
- the ability to reduce the bandwidth of the closed-loop current control, avoiding possible unsteadiness, and
- a substantially unexpensive nature of the solution, enabling the omission of costly devices (e.g. DSPs) for building estimating or adaptive control devices.

It will be appreciated that the embodiment in Figure 3 enables the overlay (sum) of the two control components, through the simple, "hard-wired" connection of two electrical lines (the one connected to resistor 48 and line 54, coming from the middle point of voltage divider 50, 52) without having to resort to complex circuit arrangements.

Of course, without prejudice to the underlying principle of the invention, the details and the embodiments may vary, even appreciably, with respect to what has been described by way of example only, without departing from the scope of the invention as defined by the claims that follow.

## Claims

1. A device for controlling power supplied to at least one LED (L1, L2, L3, L4) comprising a load (L) having a value variable as a result of switching of at least one switch (S1, S2) coupled thereto, such that the number of LEDs that are energized may be varied, the device including:
- a power supply assembly (12, 14) comprising a modulator (12) driving a power stage (14), which is adapted to supply a current (Iout) towards said load (L),
- a current feedback loop (16, 18, 22; 40, 42, 44, 46, 48) sensitive to the intensity of the current (Iout) fed towards said load (L), said current feedback loop connected (34; 120) to said power supply assembly (12, 14), wherein said current feedback loop comprises:
- a proportional/integral or proportional/ integral/derivative module (22) being configured to act on said modulator (12) driving said power stage (14) in an effort to cause the actual value of current (Iout) fed towards said load (L) to have the same value as a desired value (20),
**characterized in that** the device includes a voltage controller (30, 32; 50, 52, 54) sensitive (54) to the voltage across said load (L), said voltage controller likewise connected (34; 120) to said power supply assembly (12, 14), wherein the output signal of said voltage controller (30, 32; 50, 52, 54) cooperates with the output signal of said current feedback loop (16, 18, 22; 40, 42, 44, 46, 48) in the action of controlling the current (Iout) fed towards said load (L).

2. The device of claim 1, wherein said current feedback loop (16, 18, 22; 40, 42, 44, 46, 48) and said voltage controller (30, 32; 50, 52, 54) have respective output lines (48, 54) connected to a summation node (34; 120).

3. The device of claim 2, wherein said voltage controller includes:
- a voltage divider (50, 52) coupled to said load (L) to sense the voltage across the load (L), and
- an output line (54) from said voltage divider (50, 52) to drive (120) said power supply assembly (12, 14).

4. The device of claim 2 or claim 3, wherein said summation node (34; 120) is connected to the input of said power supply assembly (12, 14).

5. The device of claim 3, wherein said current feedback loop (16, 18, 22; 40, 42, 44, 46, 48) and said voltage controller (30, 32; 50, 52, 54) have respective output lines (48, 54) connected to each other.

6. The device of any of the previous claims including an opto-coupler (120) with an electro-optical input transducer (122) acted upon jointly by said current feedback loop (40, 42, 44, 46, 48) and said voltage controller (50, 52, 54) and an opto-electrical output transducer (124) to drive said power supply assembly (12, 14).

7. A method of controlling power supplied to at least one light source (L1, L2, L3, L4) comprising a load (L) having a value variable as a result of switching of at least one switch (S1, S2) coupled thereto, the method including controlling (12, 14) the intensity of current (Iout) fed towards said load to maintain the intensity of the current (Iout) fed towards said load (L) upon variation of said load (L), wherein said controlling includes:
- supplying the current (Iout) towards said load (L) via a power supply assembly (12, 14) comprising a modulator (12) driving a power stage (14), and
- controlling the intensity (Iout) of the current fed towards the load (L) with a current feedback loop (16, 18, 22; 40, 42, 44, 46, 48) sensitive to the intensity of the current (Iout) fed towards said load (L), wherein said current feedback loop comprises a proportional/integral or proportional/ integral/derivative module (22) being configured to act on said modulator (12) driving said power stage (14) in an effort to cause the actual value of current (Iout) fed towards said load (L) to have the same value as a desired value (20),
**characterized in that** said controlling includes controlling the intensity of the current (Iout) fed towards the load also with a voltage controller (30, 32; 50, 52, 54) sensitive to the voltage across said load (L), wherein the output signal of said voltage controller (30, 32; 50, 52, 54) cooperates with the output signal of said current feedback loop (16, 18, 20, 22; 40, 42, 44, 46, 48) in the action of controlling the current (Iout) fed towards said load (L).

## Patentansprüche

1. Vorrichtung zum Steuern von Leistung, die mindestens einer LED (L1, L2, L3, L4) bereitgestellt wird, die eine Last (L) umfasst, die einen Wert aufweist, der variabel ist als ein Ergebnis eines Schaltens von zumindest einem Schalter (S1, S2), der damit gekoppelt ist, so dass die Anzahl der LEDs, die mit Energie versorgt werden, variiert werden kann, die Vorrichtung beinhaltend:
eine Leistungsversorgungsanordnung (12, 14), die einen Modulator (12) umfasst, der eine Leistungsstufe (14) antreibt, welche eingerichtet ist, um die Last (L) mit einem Strom (Iout) zu versorgen,
eine Strom-Feedback-Schleife (16, 18, 22; 40, 42, 44, 46, 48), die sensitiv auf die Intensität des Stroms (Iout) ist, der der Last (L) zugeführt wird, wobei die Strom-Feedback-Schleife mit der Leistungsversorgungsanordnung (12, 14) verbunden ist (34; 120), wobei die Strom-Feedback-Schleife umfasst:
ein proportionales/integrales oder proportionales/integrales/ableitendes Modul (22), welches eingerichtet ist, um auf den Modulator (12) zu wirken, der die Leistungsstufe (14) antreibt, in einem Bemühen, den tatsächlichen Wert des Stroms (Iout), der der Last (L) zugeführt wird, zu veranlassen, denselben Wert aufzuweisen wie ein gewünschter Wert (20),
**dadurch gekennzeichnet, dass** die Vorrichtung eine Spannungssteuerung (30, 32; 50, 52, 54) beinhaltet, die sensitiv (54) auf die Spannung über der Last (L) ist, wobei die Spannungssteuerung gleichermaßen mit der Leistungsversorgungsanordnung (12, 14) verbunden ist (34; 120), wobei das Ausgabesignal der Spannungssteuerung (30, 32; 50, 52, 54) mit dem Ausgabesignal der Strom-Feedback-Schleife (16, 18, 22; 40, 42, 44, 46, 48) kooperiert bei der Handlung des Steuerns des Stroms (Iout), der der Last (L) zugeführt wird.

2. Vorrichtung nach Anspruch 1, wobei die Strom-Feedback-Schleife (16, 18, 22; 40, 42, 44, 46, 48) und die Spannungssteuerung (30, 32; 50, 52, 54) jeweilige Ausgabeleitungen (48, 54) aufweisen, die mit einem Summierungsknoten (34; 120) verbunden sind.

3. Vorrichtung nach Anspruch 2, wobei die Spannungssteuerung beinhaltet:
einen Spannungsteiler (50, 52), der mit der Last (L) gekoppelt ist, um die Spannung über der Last (L) abzutasten, und
eine Ausgabeleitung (54), von dem Spannungsteiler (50, 52), um die Leistungsversorgungsanordnung (12, 14) anzutreiben (120).

4. Vorrichtung nach Anspruch 2 oder 3, wobei der Summierungsknoten (34; 120) mit dem Eingang der Leistungsversorgungsanordnung (12, 14) verbunden ist.

5. Vorrichtung nach Anspruch 3, wobei die Strom-Feedback-Schleife (16, 18, 22; 40, 42, 44, 46, 48) und die Spannungssteuerung (30, 32; 50, 52, 54) jeweilige Ausgabeleitungen (48, 54) aufweisen, die miteinander verbunden sind.

6. Vorrichtung nach einem der vorhergehenden Ansprüche, je einen Optokoppler (120) mit einem elektro-optischen Eingabewandler (122) beinhaltend, auf den gemeinsam von der Strom-Feedback-Schleife (40, 42, 44, 46, 48) und der Spannungssteuerung (50, 52, 54) gewirkt wird, und einen opto-elektrischer Ausgabewandler (124), um die Leistungsversorgungsanordnung (12, 14) anzutreiben.

7. Verfahren zum Steuern von Leistung, mit der mindestens eine Lichtquelle (L1, L2, L3, L4) versorgt wird, die eine Last (L) umfasst, die einen Wert aufweist, der variabel ist als ein Ergebnis eines Schaltens von zumindest einem Schalter (S1, S2), der damit gekoppelt ist, wobei das Verfahren ein Steuern (12, 14) der Intensität des Stroms (Iout), der der Last zugeführt wird, beinhaltet, um die Intensität des Stroms (Iout), der der Last (L) zugeführt wird, aufrecht zu erhalten beim Variieren der Last (L), wobei das Steuern beinhaltet:
Versorgen der Last (L) mit dem Strom (Iout) über eine Leistungsversorgungsanordnung (12, 14), die einen Modulator (12) umfasst, der eine Leistungsstufe (14) antreibt, und
Steuern der Intensität des Stroms (Iout), der der Last (L) zugeführt wird, mit einer Strom-Feedback-Schleife (16, 18, 22; 40, 42, 44, 46, 48), die sensitiv auf die Intensität des Stroms (Iout), der der Last (L) zugeführt wird, ist, wobei die Strom-Feedback-Schleife ein proportionales/integrales oder proportionales/integrales/ableitendes Modul (22) umfasst, welches eingerichtet ist, auf den Modulator (12) zu wirken, der die Leistungsstufe (14) antreibt in einem Bemühen, den tatsächlichen Wert des Stroms (Iout), der der Last (L) zugeführt wird, zu veranlassen, denselben Wert wie ein gewünschter Wert (20) aufzuweisen, **dadurch gekennzeichnet, dass** das Steuern ein Steuern der Intensität des Stroms (Iout), der der Last zugeführt wird, ebenso mit einer Spannungssteuerung (30, 32; 50, 52, 54) beinhaltet, die sensitiv auf die Spannung über der Last (L) ist, wobei das Ausgabesignal der Spannungssteuerung (30, 32; 50, 52, 54) mit dem Ausgabesignal der Strom-Feedback-Schleife (16, 18, 20, 22; 40, 42, 44, 46, 48) kooperiert bei der Handlung des Steuerns des Stroms (Iout), der der Last (L) zugeführt wird.

## Revendications

1. Un dispositif pour contrôler l'alimentation délivrée à au moins une LED (L1, L2, L3, L4) comprenant une charge (L) présentant une valeur variant sous l'effet de la commutation d'au moins un commutateur (S1, S2) qui lui est couplé, de sorte que le nombre de LED qui sont activées puisse être modifié, le dispositif comprenant :
- un bloc d'alimentation de puissance (12, 14) comprenant un modulateur (12) pilotant un étage de puissance (14), qui est apte à délivrer un courant (Iout) vers ladite charge (L),
- une boucle de rétroaction de courant (16, 18, 22 ; 40, 42, 44, 46, 48) sensible à l'intensité du courant (Iout) envoyé vers ladite charge (L), ladite boucle de rétroaction en courant étant connectée (34 ; 120) audit bloc d'alimentation de puissance (12, 14), ladite boucle de rétroaction en courant comprenant :
- un module proportionnel/intégrateur ou proportionnel/ intégrateur/dérivateur (22) qui est configuré pour agir sur ledit modulateur (12) pilotant ledit étage de puissance (14) pour tenter de faire en sorte que la valeur réelle du courant (Iout) appliqué vers ladite charge (L) présente la même valeur qu'une valeur souhaitée (20),
**caractérisé en ce que** le dispositif comprend un contrôleur de tension (30, 32 ; 50, 52, 54) sensible (54) à la tension aux bornes de ladite charge (L), ledit contrôleur de tension étant connecté de la même façon (34 ; 120) audit bloc d'alimentation de puissance (12, 14), le signal de sortie dudit contrôleur de tension (30, 32 ; 50, 52, 54) coopérant avec le signal de sortie de ladite boucle de rétroaction de courant (16, 18, 22 ; 40, 42, 44, 46, 48) dans l'action de contrôle du courant (Iout) appliqué vers ladite charge (L).

2. Le dispositif de la revendication 1, dans lequel ladite boucle de rétroaction de courant (16, 18, 22 ; 40, 42, 44, 46, 48) et ledit contrôleur de tension (30, 32 ; 50, 52, 54) possèdent des lignes de sortie respectives (48, 54) connectées à un noeud de sommation (34 ; 120).

3. Le dispositif de la revendication 2, dans lequel ledit contrôleur de tension comprend :
- un diviseur de tension (50, 52) couplé à ladite charge (L) pour détecter la tension aux bornes de la charge (L), et
- une ligne de sortie (54) à partir dudit diviseur de tension (50, 52) pour piloter (120) ledit bloc d'alimentation de puissance (12, 14).

4. Le dispositif de la revendication 2 ou de la revendication 3, dans lequel ledit noeud de sommation (34 ; 120) est connecté à l'entrée dudit bloc d'alimentation de puissance (12, 14).

5. Le dispositif de la revendication 3, dans lequel ladite boucle de rétroaction de courant (16, 18, 22 ; 40, 42, 44, 46, 48) et ledit contrôleur de tension (30, 32 ; 50, 52, 54) possèdent des lignes de sortie respectives (48, 54) connectées l'une à l'autre.

6. Le dispositif de l'une des revendications précédentes, comprenant un optocoupleur (120) avec un transducteur d'entrée électrooptique (122) actionné concurremment par ladite boucle de rétroaction de courant (40, 42, 44, 46, 48) et ledit contrôleur de tension (50, 52, 54) et un transducteur de sortie optoélectrique (124) pour piloter ledit bloc d'alimentation de puissance (12, 14).

7. Un procédé de contrôle de l'alimentation délivrée à au moins une source lumineuse (L1, L2, L3, L4) comprenant une charge (L) présentant une valeur variable du fait de la commutation d'au moins un commutateur (S1, S2) qui lui est couplé, le procédé comprenant le contrôle (12, 14) de l'intensité d'un courant (Iout) appliqué vers ladite charge pour maintenir l'intensité du courant (Iout) appliqué vers ladite charge (L) lorsque ladite charge (L) varie, dans lequel ledit contrôle comprend :
- la délivrance du courant (Iout) vers ladite charge (L) via un bloc d'alimentation de puissance (12, 14) comprenant un modulateur (12) pilotant un étage de puissance (14), et
- le contrôle de l'intensité (Iout) du courant appliqué vers la charge (L) avec une boucle de rétroaction de courant (16, 18, 22 ; 40, 42, 44, 46, 48) sensible à l'intensité du courant (Iout) appliqué vers ladite charge (L), ladite boucle de rétroaction de courant comprenant un module proportionnel/intégrateur ou proportionnel/intégrateur/dérivateur (22) configuré pour agir sur ledit modulateur (12) qui pilote ledit étage de puissance (14) pour tenter de faire en sorte que la valeur réelle du courant (Iout) appliqué vers ladite charge (L) présente la même valeur qu'une valeur souhaitée (20),
**caractérisé en ce que** ledit contrôle comprend le contrôle de l'intensité du courant (Iout) appliqué vers la charge également avec un contrôleur de tension (30, 32 ; 50, 52, 54) sensible à la tension aux bornes de ladite charge (L), le signal de sortie dudit contrôleur de tension (30, 32 ; 50, 52, 54) coopérant avec le signal de sortie de ladite boucle de rétroaction de courant (16, 18, 20, 22 ; 40, 42, 44, 46, 48) dans l'action de contrôle du courant (Iout) appliqué vers ladite charge (L).
